(19) **Europäisches Patentamt / European Patent Office / Office européen des brevets**

(11) **EP 4 675 514 A1**

(12) **EUROPEAN PATENT APPLICATION**
published in accordance with Art. 153(4) EPC

(43) Date of publication:
07.01.2026 Bulletin 2026/02

(21) Application number: 23925330.5

(22) Date of filing: 02.03.2023

(51) International Patent Classification (IPC):
**G06N 10/80** (2022.01)

(52) Cooperative Patent Classification (CPC):
**G06N 10/80**

(86) International application number:
**PCT/JP2023/007897**

(87) International publication number:
**WO 2024/180776 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventor: **KIMURA, Yusuke**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **PRE-ANALYSIS PROGRAM, INFORMATION PROCESSING DEVICE, AND SIMULATION METHOD**

(57) On the basis of characteristic information (21) indicating a relation between types of quantum gates used in a quantum circuit and simulation times in a DD quantum circuit simulator (30), an information processing apparatus (1) counts, for each qubit of the quantum circuit targeted, the numbers of quantum gates in descending order of simulation time. The information processing apparatus (1) then determines quantum gates with simulation time lengths at a predetermined rank or higher from plural types of quantum gates, determines the number of quantum gates for each quantum gate determined in a case where there are plural types of quantum gates determined to be at the predetermined rank or higher, rearranges an order of qubits to be provided to the quantum circuit simulator (30) in ascending order of the number determined, and outputs the rearranged order of the qubits. The information processing apparatus (1) thereby enables increase in speed of the simulation time of the DD quantum circuit simulator (30).

FIG.1

EP 4 675 514 A1

## Description

Technical Field

The present invention relates to, for example, preliminary analysis programs.

Background Art

Quantum circuit simulators using general computers have been used for development of algorithms for quantum computers in recent years. Quantum circuit simulators are programs that calculate quantum states upon input of information on quantum circuits. In general, quantum gates suitable for quantum circuit simulators differ according to types of the quantum circuit simulators. Furthermore, execution speeds of quantum circuit simulators, to which orders of qubits need to be provided, are known to change according to the orders of qubits.

Examples of types of quantum circuit simulators include the StateVector type, the Decision Diagram (DD) type, and the Tensor Network type. StateVector quantum circuit simulators have the same execution time for any quantum circuit. Tensor Network quantum circuit simulators are fast for quantum circuits with small numbers of quantum gates, but execution may be difficult for quantum circuits with large numbers of quantum gates. DD quantum circuit simulators are fast for quantum circuits with no quantum gates having parameters but are slow for quantum circuits with many quantum gates having parameters. Therefore, the order of qubits to be provided to the quantum circuit simulators is needed.

DD quantum circuit simulators are also used in classical logic circuit simulation other than quantum circuit simulation. For classical logic circuits, there are empirical rules for the order of decision variables for decreasing the execution time and the memory capacity. The importance of the order is disclosed in, for example, non-patent literature, "Graph-Based Algorithms for Boolean Function Manipulation". Furthermore, for classical logic circuits, a technique called dynamic reorder has been known, the technique being for gradually decreasing the memory capacity by testing various rearrangements during DD construction. This dynamic reorder has been disclosed in, for example, non-patent literature, "Dynamic variable order for ordered binary decision diagrams". Furthermore, a technique for generating binary decision diagrams corresponding to classical logic circuits has been disclosed (see, for example, Patent Literature 1 and Patent Literature 2).

Citation List

Patent Literature

Patent Literature 1: Japanese Laid-open Patent Publication No. 2001-109785
Patent Literature 2: Japanese Laid-open Patent Publication No. H10-040270
Patent Literature 3: Specification of U.S. Patent Application Publication No. 2005/0229124

Summary of invention

Technical Problem

However, conventional DD quantum circuit simulators have a problem that their simulation takes time. For example, conventional DD quantum circuit simulators do not perform rearrangement of qubits. The execution speed of DD quantum circuit simulators is influenced by the order of qubits, but because no modifications are made to the order of qubits, their simulation takes time.

A technique for rearranging, for example, the order of decision variables has been proposed for classical logic circuits. However, this proposal is a proposal for classical logic circuits and is not applicable to quantum circuits.

In one aspect, an object of the present invention is to speed up the simulation time of a DD quantum circuit simulator.

Solution to Problem

In one embodiment, a preliminary analysis program causes a computer to execute a process. The process includes counting, on the basis of a relation between types of quantum gates of plural types used in a quantum circuit and simulation times in a quantum circuit simulator that uses a decision diagram, the numbers of the quantum gates in descending order of the simulation time for each qubit of the quantum circuit targeted, determining the quantum gates with lengths of the simulation times at a predetermined rank or higher from the plural types of quantum gates, and determining the number of the quantum gates for each of the quantum gates determined in a case where there are plural types of the quantum gates determined to be at the predetermined rank or higher, and rearranging an order of the qubits to be provided to the quantum circuit simulator in ascending order of the number determined, and outputting the rearranged order of the qubits.

Advantageous Effects of Invention

According to one embodiment, the simulation time of a DD quantum circuit simulator is able to be speeded up.

Brief Description of Drawings

FIG. 1 is a diagram illustrating a functional configuration of an information processing apparatus according to an embodiment.
FIG. 2 is a diagram illustrating an example of characteristic information according to the embodiment.
FIG. 3 is a diagram illustrating an example of count information according to the embodiment.
FIG. 4 is a diagram illustrating an example of characteristic extraction according to the embodiment.
FIG. 5 is a diagram illustrating an example of order generation according to the embodiment.
FIG. 6 is a diagram illustrating an example of final quantum states executed by a quantum circuit simulator.
FIG. 7 is a diagram illustrating an example of a flowchart of an order generation process according to the embodiment.
FIG. 8 is a diagram illustrating an example of results of execution by the quantum circuit simulator.
FIG. 9 is a diagram illustrating an example of a computer that executes a preliminary analysis program.
FIG. 10 is a diagram illustrating a reference example of a quantum circuit.
FIG. 11 is a diagram illustrating a reference example of quantum states of the quantum circuit.
FIG. 12 is a diagram illustrating a reference example of principles of a DD.
FIG. 13 is a diagram illustrating a reference example of quantum states of a DD quantum circuit simulator.
FIG. 14 is a reference diagram illustrating that a DD changes in shape according to order.

Embodiments for Carrying Out the Invention

An embodiment of a preliminary analysis program, an information processing apparatus, and a simulation method, disclosed by the present application will hereinafter be described in detail, on the basis of the drawings. The present invention is not to be limited by the embodiment.

A quantum circuit to be simulated by a quantum circuit simulator will be described first.

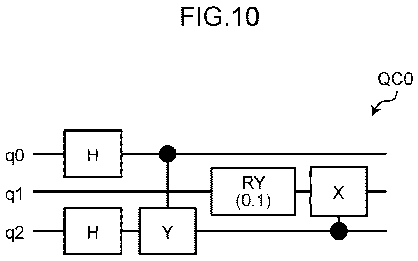

FIG. 10 is a diagram illustrating a reference example of a quantum circuit. As illustrated in FIG. 10, a quantum circuit QC0 is depicted as an example of a quantum circuit. The quantum circuit QC0 is a quantum computation model described by a combination of quantum gates. The horizontal lines are qubits (qubits). The qubits are the smallest units of quantum information and have a quantum state of "0" or "1". Herein, "q0", "q1", and "q2" are the qubits.

Quantum gates are gates that act on qubits and manipulate quantum states of qubits. Herein, "H", "Y", "X", and "RY" are quantum gates. For example, "H" is a single qubit gate that controls the quantum state of a single qubit. "X" and "Y" are multiple-qubit gates that control the quantum states of plural qubits. "RY" is a qubit gate having a parameter. The quantum gates are not limited to "H", "Y", "X", and "RY" and there are various types of quantum gates.

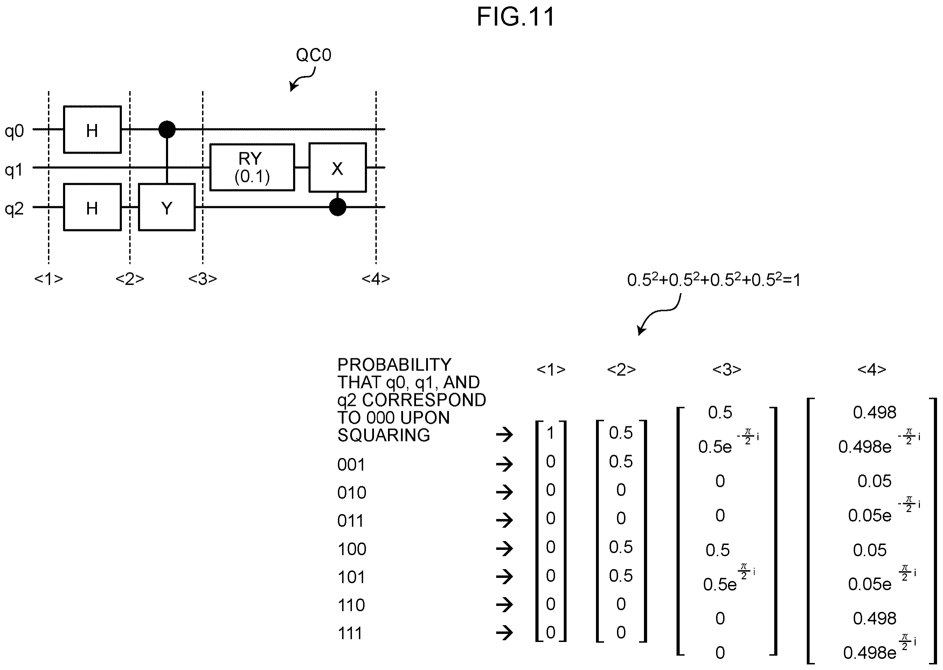

FIG. 11 is a diagram illustrating a reference example of quantum states of the quantum circuit. As illustrated in FIG. 11, the quantum circuit QC0 lets the quantum gates act on the qubits to gradually change the quantum states of the qubits and to perform meaningful computation. Herein, the probabilities of the qubits, "q0", "q1", and "q2", being in the respective quantum states at timings <1>, <2>, <3>, and <4> have been illustrated. At the timing <1>, each of the qubits is in its initial state and the probability of these qubits being in a quantum state, "000", is "1". The first "0" of "000" is the quantum state of "q0". The second "0" of "000" is the quantum state of "q1". The third "0" of "000" is the quantum state of "q2". The probability of being in each quantum state other than "000" is "0". That is, the probabilities of "q0", "q1", and "q2" being in the quantum states, "000", "001", "010", "011", "100", "101", "110", and "111", are respectively "1, 0, 0, 0 0, 0, 0, 0". The probabilities have been adjusted so that a result of squaring the probabilities and summing the squared probabilities is "1".

At the timing <2>, the probabilities for "000", "001", "100", and "101" representing quantum states of the qubits are "0.5". The probabilities of being in the quantum states other than "000", "001", "100", and "101" are "0". That is, the probabilities of "q0", "q1", and "q2" being in the quantum states,"000", "001", "010", "011", "100", "101", "110", and "111" are respectively "0.5, 0.5, 0, 0, 0.5, 0.5, 0, 0". The probabilities have been adjusted so that a result of squaring the probabilities and summing the squared probabilities is "1".

At the timing <3> and the timing <4>, similarly, the probabilities of "q0", "q1", and "q2" being in the quantum states, "000", "001", "010", "011", "100", "101", "110", and "111" are respectively calculated. The probabilities are adjusted so that results of squaring the probabilities and summing the squared probabilities are "1".

DD quantum circuit simulators are programs that calculate quantum states corresponding to quantum circuits by using DDs. DDs are data structures that are able to efficiently express vectors and matrices. That is, in place of vectors, DDs are able to express quantum states of qubits. Edges in a DD may have values or no values, but a case where edges have values will be applied to this embodiment. Furthermore, a DD may hereinafter be referred to as a "decision diagram".

Furthermore, DD quantum circuit simulators are fast for circuits without any quantum gate having a parameter, which is one type of quantum gate, but DD-type quantum circuit simulators have a characteristic of being slow for quantum circuits with any quantum gate having a parameter, like "RY" illustrated in FIG. 10. Therefore, the order of qubits to be provided to the quantum circuit simulators is important.

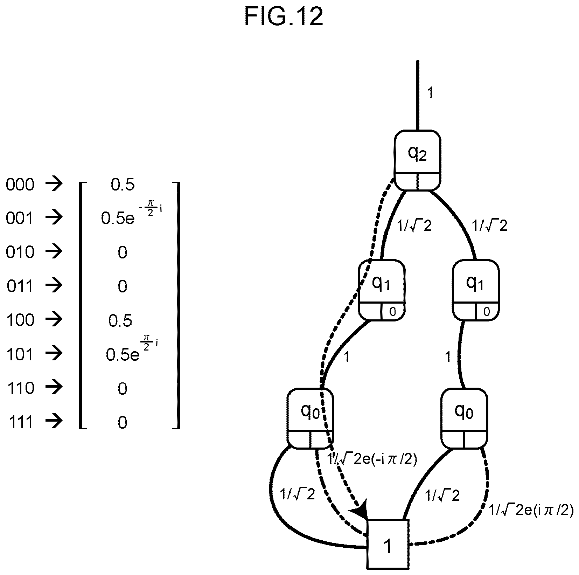

The following description is on principles of DDs (decision diagrams) in a case where the order of the qubits "q0", "q1", and "q2" is provided to a DD simulator. FIG. 12 is a diagram illustrating a reference example of the principles of DDs. A DD (decision diagram) is illustrated in a diagram on the right in FIG. 12. The probabilities of qubits being in the respective quantum states at the timing <3> illustrated in FIG. 11 are represented by vectors, in a diagram on the left in FIG. 12. The probabilities of being in the respective quantum states can be read as follows from the decision diagram. Nodes of the decision diagram are the respective qubits. The qubits, "q0", "q1", and "q2", represented by the nodes are illustrated in order from the bottom. The left of the nodes is "0" indicating a quantum state. The right of the nodes is "1" indicating a quantum state.

For example, upon following along a dotted line, quantum states of "q2", "q1", and "q0" are represented by a vector, "001". The product of values assigned to edges on the dotted line are the value of elements of the probability vector. Therefore, the value of the elements of the probability vector, which is the vector, for the quantum states, "001", is calculated as expressed by Equation (1) by multiplication of the values of the edges on the dotted line.

$$\frac{1}{\sqrt{2}} * 1 * \frac{1}{\sqrt{2}} e^{-\frac{\pi}{2}i} = 0.5 e^{-\frac{\pi}{2}i} \qquad \cdots \text{Equation (1)}$$

The value is "0" for a route without any edge. Therefore, in a case where the quantum states of "q2", "q1", and "q0" correspond to a vector, "010", because there is no edge indicating the quantum state of "1" for "q1", the value of the elements of the probability vector of the vector "010" is "0".

Instead of having quantum states as vectors, DD quantum circuit simulators use DDs (decision diagrams). As a result, there is no need for the amount of information on vectors to be stored and the amount of information on vectors is able to be compressed.

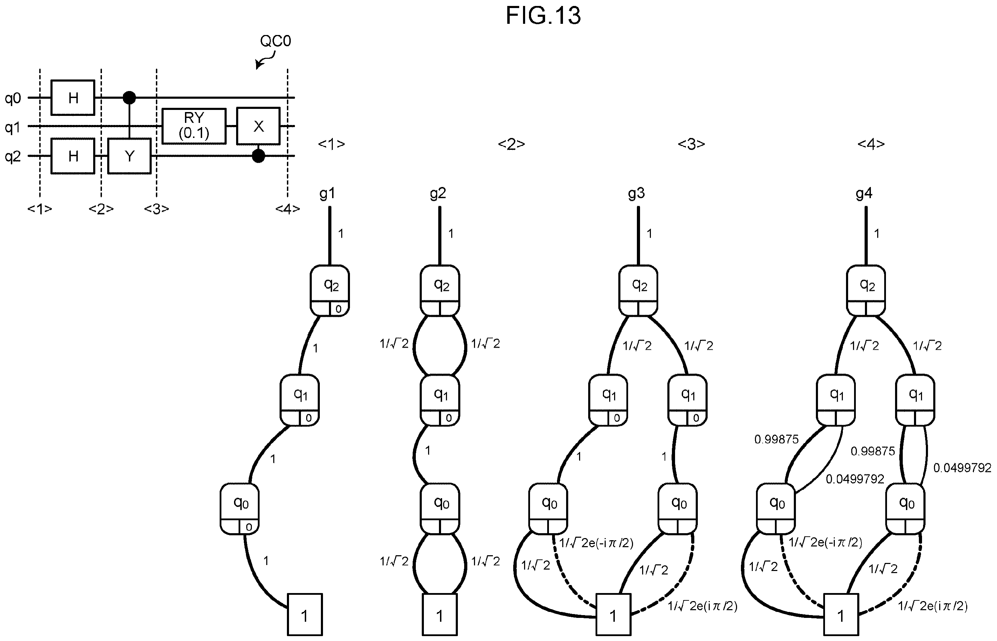

FIG. 13 is a diagram illustrating a reference example of quantum states for a DD quantum circuit simulator. FIG. 13 corresponds to a case where the order of qubits, "q0", "q1", and "q2", has been provided to the DD simulator.

As illustrated in FIG. 13, the DD quantum circuit simulator runs quantum simulations by operating and changing DDs (decision diagrams) from <1> to <2>, from <2> to <3>, and from <3> to <4> and calculating a quantum state every time. Herein, a DD (decision diagram) having a reference numeral g1 represents a quantum state of the quantum circuit at the timing <1>. The timing <1> is the initial state and the quantum state, "000", is thus represented by the DD. That is, instead of having the quantum state as the vector, "000", the DD represents the quantum state.

Furthermore, a DD (decision diagram) having a reference numeral g2 represents a quantum state of the quantum circuit at the timing <2>. That is, the quantum state upon the change of the DD from <1> to <2> is illustrated. In other words, instead of having the quantum state as a vector, the DD represents the quantum state. A DD (decision diagram) having a reference numeral g3 represents a quantum state of the quantum circuit at the timing <3>. That is, the quantum state upon the change of the DD from <2> to <3> is illustrated. In other words, instead of having the quantum state as a vector, the DD represents the quantum state. A DD (decision diagram) having a reference numeral g4 represents a quantum state of the quantum circuit at the timing <4>. That is, the quantum state upon the change of the DD from <3> to <4> is illustrated. In other words, instead of having the quantum state as a vector, the DD represents the quantum state.

The changes in the DDs illustrated in FIG. 13 correspond to a case where the order of qubits, "q0", "q1", and "q2", has been provided to the DD quantum circuit simulator. The order described in quantum circuits is used directly in typical DD quantum circuit simulators. However, DDs change in size and shape according to the order, in which qubits are provided.

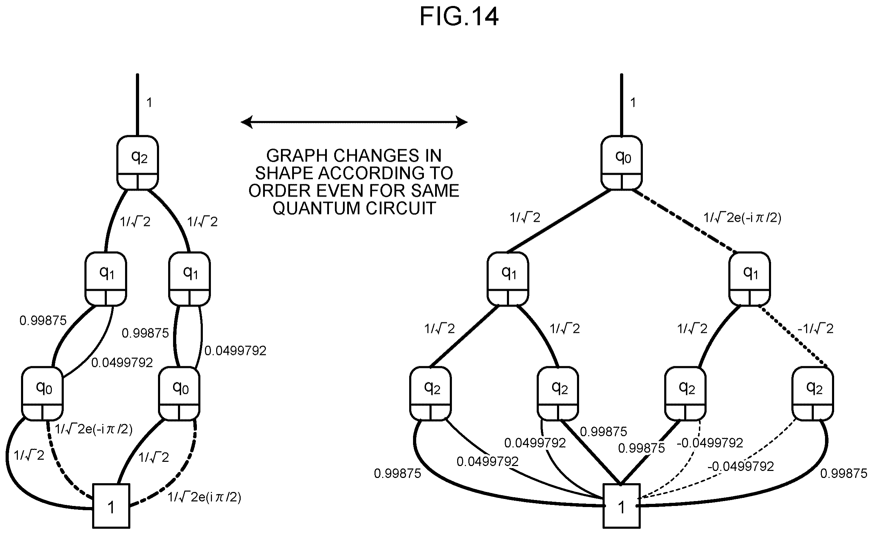

FIG. 14 is a reference diagram illustrating that a DD changes in shape according to the order. A diagram on the left in FIG. 14 is a DD (decision diagram) in a case where the order of qubits is "q0", "q1", and "q2". A diagram on the right in FIG. 14 is a DD (decision diagram) in a case where the order of the qubits is "q2", "q1", and "q0". These two DDs (decision diagrams) are DDs for the same quantum circuit at the same timing. Therefore, they illustrate that DDs (decision diagrams) change in shape according to the order of qubits even for the same quantum circuit.

In other words, the order of qubits provided affects how the shape of a DD changes upon temporal evolution of a quantum circuit. That is, the simulation time is changed. Unless the order of qubits provided is modified, the simulation time will thus increase.

Therefore, in a method described with respect to this embodiment, the order of qubits provided is modified to speed up the simulation time of the DD quantum circuit simulator.

Functional Configuration of Information Processing Apparatus

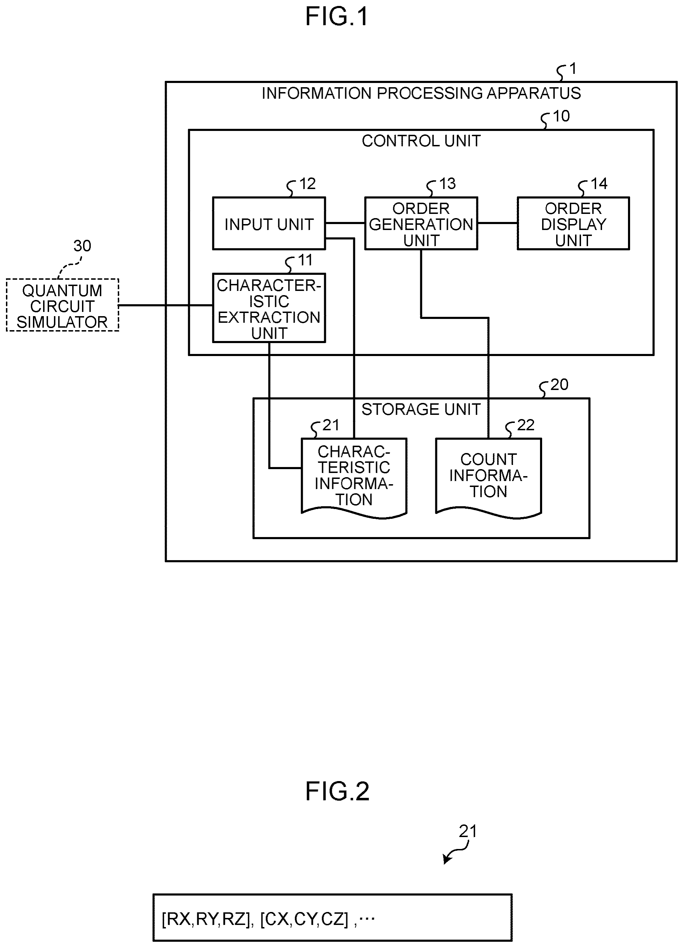

FIG. 1 is a diagram illustrating a functional configuration of an information processing apparatus according to the embodiment. An information processing apparatus 1 performs preliminary analysis for speeding up the simulation time before running a simulation of a quantum state of a quantum circuit by means of a quantum circuit simulator 30. In the preliminary analysis, on the basis of characteristics of the quantum circuit simulator 30 of the DD type, the information processing apparatus 1 counts the number of quantum gates that take time in their execution, for each qubit of a quantum circuit to be simulated. The information processing apparatus 1 rearranges the order of qubits to be provided to the quantum circuit simulator 30 to ascending order of the number of time-consuming quantum gates. In other words, the information processing apparatus 1 counts the numbers of quantum gates in descending order of simulation time for each qubit of the quantum circuit, determines quantum gates at a predetermined rank or higher from the quantum gates with plural types of simulation time lengths, determines the numbers of quantum gates for the respective quantum gates determined in a case where there are plural types of quantum gates determined to be at the predetermined rank or higher, and rearranges the order of the qubits to be provided to the quantum circuit simulator 30 to ascending order of the number of quantum gates determined. The quantum circuit simulator 30 is a simulator that runs simulations using decision diagrams. The quantum circuit simulator 30 receives the order of qubits for constructing a decision diagram.

As illustrated in FIG. 1, the information processing apparatus 1 has a control unit 10 and a storage unit 20. The control unit 10 has a characteristic extraction unit 11, an input unit 12, an order generation unit 13, and an order display unit 14. The storage unit 20 has characteristic information 21 and count information 22. The order generation unit 13 is an example of a counting unit and a rearrangement unit. The order display unit 14 is an example of an output unit.

The characteristic extraction unit 11 extracts characteristics of the quantum circuit simulator 30. The quantum circuit simulator 30 herein is a DD quantum circuit simulator. For example, the characteristic extraction unit 11 generates a list of quantum gates that take time in their execution, the list serving as the characteristic information 21 on the quantum circuit simulator 30. For example, by using a quantum circuit, the characteristic extraction unit 11 places quantum gates to be examined at respective predetermined positions of plural qubits represented by horizontal lines of the quantum circuit and measures execution times of the quantum gates. By rearranging the plural quantum gates to be examined one by one, the characteristic extraction unit 11 measures execution times of the respective quantum gates. The characteristic extraction unit 11 generates, for example, a list of types of quantum gates in descending order of time needed for execution for the quantum gates to be examined, and holds the list generated in the characteristic information 21. A case where the characteristic extraction unit 11 experimentally extracts the characteristics of the quantum circuit simulator 30 by using the quantum circuit has been described, but the embodiment is not limited to this case. The characteristic extraction unit 11 may let a specialist having knowledge about the characteristics of the quantum circuit simulator 30 manually extract the characteristics of the quantum circuit simulator 30.

An example of the characteristic information 21 will now be described by reference to FIG. 2. FIG. 2 is a diagram illustrating an example of characteristic information according to the embodiment. As illustrated in FIG. 2, the characteristic information 21 is a list of quantum gates in descending order of execution time. That is, the order of quantum gates in descending order of execution time is used as the characteristics of the quantum circuit simulator. Herein, the descending order of execution time of the quantum gates is written as [RX, RY, RZ] and [CX, CY, CZ]. "RX", "RY", and "RZ" are quantum gates of a type called parameter gates having parameters and have about the same execution time. "CX", "CY", and "CZ" are quantum gates of a type called control gates that act on two qubits and take less time in their execution than parameter gates. The characteristic information 21 may include quantum gates, "H", of a type called single qubits gates that act on a single qubit.

The input unit 12 illustrated in FIG. 1 inputs information on a quantum circuit targeted and the characteristic information 21.

The order generation unit 13 rearranges the order of qubits to be provided to the quantum circuit simulator 30 for the quantum circuit targeted. For example, the order generation unit 13 counts the numbers of quantum gates included for each qubit by type, on the basis of the information on the quantum circuit targeted input by the input unit 12. The order generation unit 13 then holds results of the counting in the count information 22.

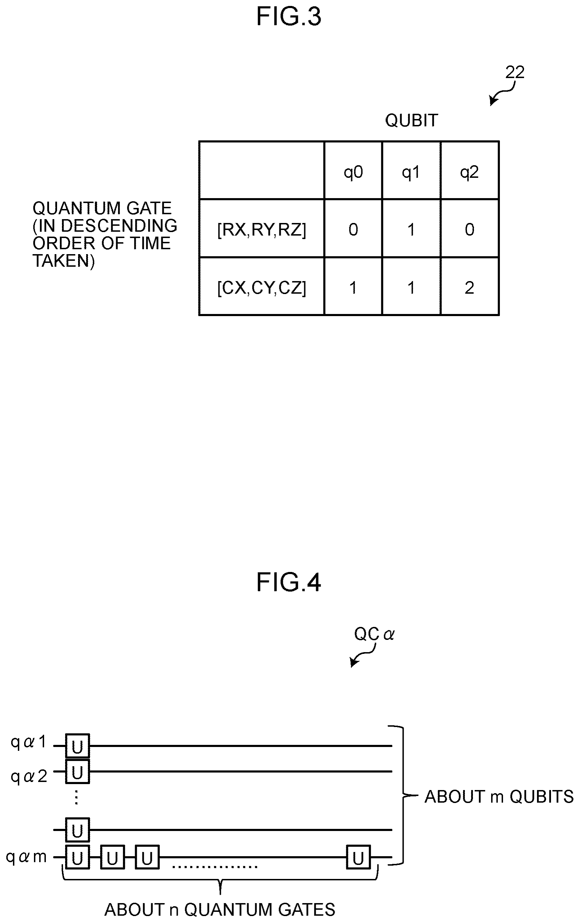

An example of the count information 22 will now be described by reference to FIG. 3. FIG. 3 is a diagram illustrating an example of count information according to the embodiment. As illustrated in FIG. 3, the count information 22 is information resulting from counting of the numbers of quantum gates by type, for each qubit of a quantum circuit. The types of quantum gates are arranged in descending order of execution time. In the count information 22, the quantum gates, [RX, RY, RZ] and [CX, CY, CZ], are arranged in this order. For the qubit q0, one quantum gate of the type, [CX, CY, CZ], has been counted. For the qubit q1, one quantum gate of the type, [RX, RY, RZ], has been counted, and one quantum gate of the type, [CX, CY, CZ], has been counted. For the qubit q2, two quantum gates of the type, [CX, CY, CZ], has been counted.

The order generation unit 13 illustrated in FIG. 1 rearranges the order of qubits to be provided to the quantum circuit simulator 30 in ascending order of the number of quantum gates that take time in simulation, by using the count information 22. For example, by referring to the count information 22, the order generation unit 13 selects the types of quantum gates in descending order of execution time. The order generation unit 13 posteriorly rearranges a qubit with a larger number of quantum gates of the type selected. In this rearrangement, the order generation unit 13 puts qubits with the same number of quantum gates in the same group for the rearrangement. Furthermore, in a case where there is any group in the already rearranged qubits, the order generation unit 13 performs rearrangement within the same group. That is, the order generation unit 13 rearranges the qubits so that a qubit with a larger number of quantum gates that take time in their execution is posterior. In other words, the order generation unit 13 rearranges the qubits in ascending order of the number of quantum gates that take time in their execution.

The order display unit 14 displays the order of qubits rearranged by the order generation unit 13 on, for example, a monitor.

Thereafter, the quantum circuit simulator 30 receives the order of qubits displayed by the order display unit 14 and the information on the quantum circuit targeted and runs a simulation of a quantum state of each qubit of the quantum circuit to be simulated. The quantum circuit simulator 30 is thereby able to run a simulation such that any qubit that takes time in its execution is posterior and to enable the simulation to be speeded up. The following is a description of this effect. When a quantum gate acts on a qubit, part ranked lower than this qubit (posterior in the qubit order) is affected. When a quantum gate that tends to take time acts on a qubit in part ranked higher (anterior in the qubit order) in a decision diagram, nodes to be updated tend to be increased and larger memory tends to be newly needed. Therefore, the inventor supposed that a quantum gate that tends to take time is preferably caused to act on a qubit in part ranked lower (posterior in the qubit order) of a decision diagram. As a result, by qubits being posterior in the order, the qubits having time-consuming quantum gates, the time-consuming quantum gates will act on qubits in part ranked lower (posterior in the qubit order) in the decision diagram and the quantum circuit simulator 30 thus enables its simulation to be speeded up.

Example of Characteristic Extraction

FIG. 4 is a diagram illustrating an example of characteristic extraction according to the embodiment. An example of a case where the characteristic extraction unit 11 experimentally extracts the characteristics of the quantum circuit simulator 30 by using a quantum circuit QC will be described by reference to FIG. 4.

FIG. 4 illustrates a quantum circuit QCα. The quantum circuit QCα includes about m qubits qα. The quantum circuit QCα includes a predetermined number of quantum gates, "U", at predetermined positions, for each qubit qα. The qubit including the largest number of quantum gates, "U", is assumed to be the most anterior one in the order of qubits and to have about n quantum gates.

In such a situation, by using the quantum circuit QCα and replacing the predetermined number of quantum gates, "U", at the predetermined positions, of each of the m qubits qα1 to qαm, with one quantum gate to be examined, the characteristic extraction unit 11 measures the execution time of the quantum gate. The characteristic extraction unit 11 then replaces the quantum gates, U", with another quantum gate to be examined and measures the execution time of that quantum gate. Similarly, the characteristic extraction unit 11 measures the execution times of all of quantum gates to be examined. The characteristic extraction unit 11 then generates, for example, a list of types of quantum gates in descending order of execution time for the quantum gates to be examined and holds the list generated in the characteristic information 21. The quantum gates, "U", are replaced with, for example, the quantum gates to be examined, such as "CX", "CY", "CZ", "RX", "RY", "RZ", and "H".

Example of Order Generation

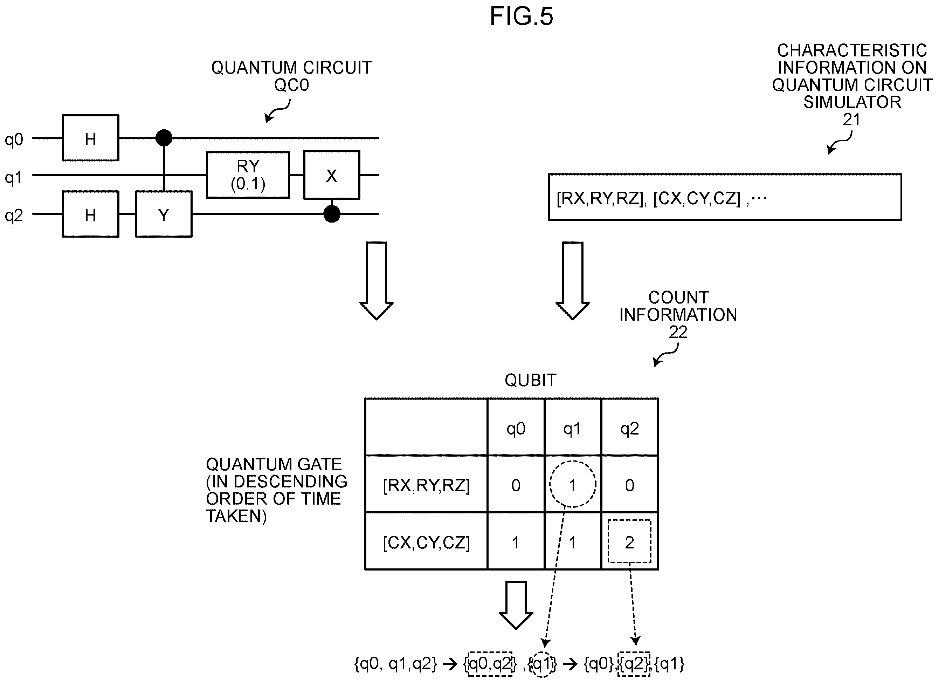

FIG. 5 is a diagram illustrating an example of order generation according to the embodiment. As illustrated at the top in FIG. 5, the order generation unit 13 acquires information on the quantum circuit QC0 targeted and the characteristic information 21 on the quantum circuit simulator 30. The characteristic information 21 on the quantum circuit simulator 30 has, described therein, the quantum gates, [RX, RY, RZ] and [CX, CY, CZ], in descending order of execution time. Herein, "H" is a single qubit gate and does not take time in its execution as compared to other types and is thus not written in the characteristic information 21.

"RX", "RY", and "RZ" are quantum gates of the type called parameter gates having parameters. RX", "RY", and "RZ" have about the same execution time. "CX", "CY", and "CZ" are quantum gates of the type called control gates that act on two qubits. The execution times of "CX", "CY", and "CZ" are less than those of "RX", "RY", and "RZ". Quantum gates "X" and "Y" in the quantum circuit QC0 are synonymous with "CX" and "CY" and mean quantum gates of the type called control gates that act on two qubits.

Subsequently, on the basis of the information on the quantum circuit QC0 targeted, the order generation unit 13 counts the numbers of quantum gates included for each qubit by type, as illustrated in the middle in FIG. 5. For the qubit, "q0", "H" and "Y" (synonymous with "CY") have been placed as quantum gates. Therefore, the order generation unit 13 counts "1" for [CX, CY, CZ] corresponding to "q0". Furthermore, for the qubit, "q1", "RY" and "X" (synonymous with "CX") have been placed as quantum gates. Therefore, with respect to "q1", the order generation unit 13 counts "1" for [RX, RY, RZ] and counts "1" for [CX, CY, CZ]. Furthermore, for the qubit, "q2", "H", "Y" (synonymous with "CY"), and "X" (synonymous with "CX") have been placed as quantum gates. Therefore, the order generation unit 13 counts "2" for [CX, CY, CZ] corresponding to "q2". The order generation unit 13 then holds results of the counting in the count information 22.

Subsequently, as illustrated at the bottom in FIG. 5, the order generation unit 13 rearranges the order of qubits to be provided to the quantum circuit simulator 30 in ascending order of the number of quantum gates that take time in their execution, by using the count information 22.

First, by referring to the count information 22, the order generation unit 13 selects the types of quantum gates in descending order of execution time. Herein, [RX, RY, RZ] in the first line is selected as the type of quantum gate that takes time in its execution the most.

The order generation unit 13 then posteriorly rearranges the qubit with the largest number of quantum gates of the type selected. In this rearrangement, the order generation unit 13 puts qubits with the same number of quantum gates in the same group for the rearrangement. Herein, the qubit with the largest number of quantum gates corresponding to [RX, RY, RZ] selected is "q1", for which "1" has been counted. The order generation unit 13 thus rearranges "q1" most posteriorly. For both of the qubits, "q0" and "q2", the same "0" has been counted. The order generation unit 13 thus performs rearrangement by putting "q0" and "q2" in the same group. As a result, the order generation unit 13 rearranges "{q0, q1, q2}" to "{q0, q2}, {q1}".

Subsequently, by referring to the count information 22, the order generation unit 13 selects the types of quantum gates in descending order of their execution time. Herein, [CX, CY, CZ] in the second line is selected as the type of quantum gate that takes time in its execution the second most.

The order generation unit 13 then posteriorly rearranges the qubit with the largest number of quantum gates of the type selected. In this rearrangement, the order generation unit 13 puts qubits with the same number of quantum gates in the same group. Furthermore, in a case where there is a group in the already rearranged qubits, the order generation unit 13 performs rearrangement within the same group. Herein, the qubit with the largest number of quantum gates corresponding to [CX, CY, CZ] selected is "q2", for which "2" has been counted. This "q2" belongs to the group {q0, q2} that has been rearranged already. Therefore, the order generation unit 13 posteriorly rearranges "q2" with the largest number of quantum gates within the group {q0, q2}. As a result, the order generation unit 13 rearranges "{q0, q2}, {q1}" to "{q0}, {q2}, {q1}".

By rearranging qubits having time-consuming quantum gates posteriorly, the order generation unit 13 thereby enables the time-consuming quantum gates to act on qubits in part ranked lower (posterior in the qubit order) of a decision diagram. As a result, the order generation unit 13 enables increase in the speed of a simulation executed thereafter by the quantum circuit simulator 30.

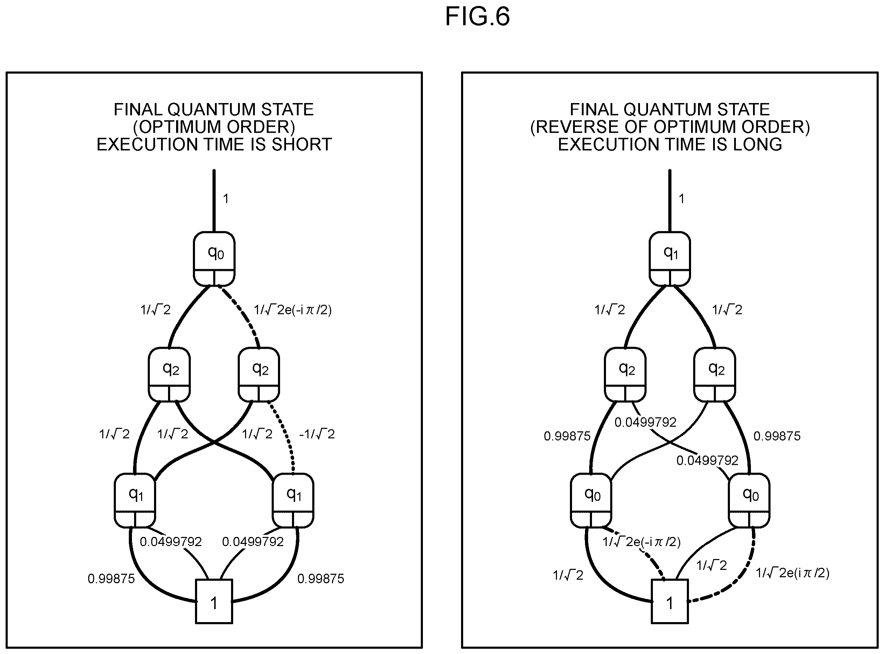

Final quantum states executed by the quantum circuit simulator 30 will now be described by reference to FIG. 6. FIG. 6 is a diagram illustrating an example of final quantum states executed by a quantum circuit simulator. A diagram on the left in FIG. 6 illustrates a final decision diagram in a case where the quantum circuit simulator 30 has performed execution with the optimum order "{q1}, {q2}, {q0}" rearranged by the order generation unit 13. A diagram on the right in FIG. 6 illustrates a final decision diagram in a case where the quantum circuit simulator 30 has performed execution with the order "{q0}, {q2}, {q1}", which is the reverse of the optimum order rearranged by the order generation unit 13. The final decision diagrams represent final quantum states.

As illustrated in the diagram on the right in FIG. 6, in the case where the quantum circuit simulator 30 has performed the execution with the order that is the reverse of the optimum order, the quantum circuit simulator 30 causes a time consuming quantum gate to act on the qubit "q0" in the anterior part of the decision diagram because the qubit "q0" having the time consuming quantum gate has been placed anteriorly. As a result, the quantum circuit simulator 30 will have more nodes to be updated and will need larger memory newly, for example, and will thus take longer in executing a simulation.

By contrast, as illustrated in the diagram on the left in FIG. 6, the quantum circuit simulator 30 will cause the time consuming quantum gate to act on the qubit "q0" in the lower ranked part (posterior in the qubit order) of the decision diagram because the qubit "q0" having the time consuming quantum gate has been placed posteriorly. As a result, the quantum circuit simulator 30 will take less time in executing a simulation and will thus enable the simulation to be speeded up.

Flowchart of Order Generation Process

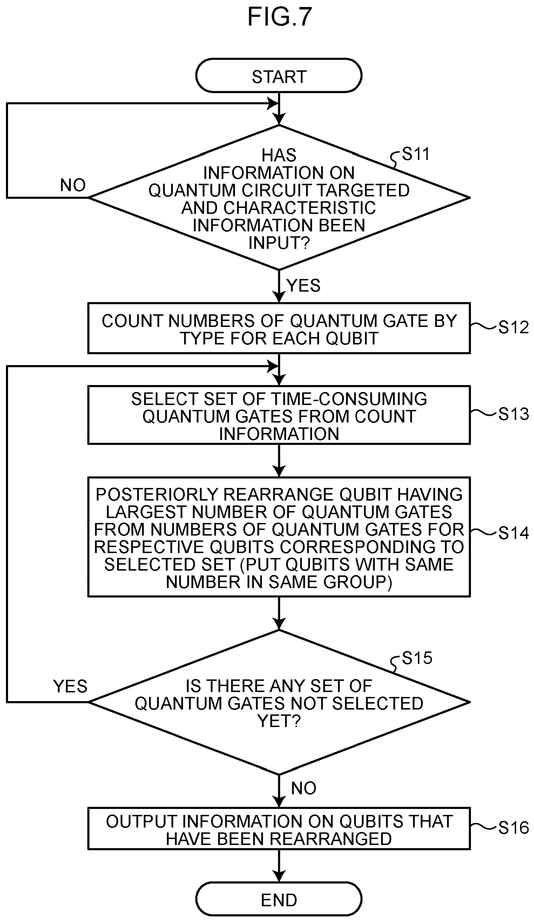

FIG. 7 is a diagram illustrating an example of a flowchart of an order generation process according to the embodiment. It is assumed that the characteristic information 21 on the quantum circuit simulator 30 has been extracted and held already.

As illustrated in FIG. 7, the information processing apparatus 1 determines whether or not information on a quantum circuit to be simulated and the characteristic information 21 on the quantum circuit simulator 30 have been input (Step S11). In a case where the information processing apparatus 1 determines that the information on the quantum circuit to be simulated and the characteristic information 21 on the quantum circuit simulator 30 have not been input (Step S11: No), the information processing apparatus 1 repeats the determination process until they have been input.

On the contrary, in a case where the information processing apparatus 1 determines that the information on the quantum circuit to be simulated and the characteristic information 21 on the quantum circuit simulator 30 have been input (Step S11: Yes), the information processing apparatus 1 counts, for each qubit, the numbers of quantum gates by type (Step S12). For example, the information processing apparatus 1 counts the numbers of quantum gates by type included for each qubit, on the basis of the information on the quantum circuit to be simulated. The information processing apparatus 1 then holds results of the counting in the count information 22.

The information processing apparatus 1 then selects, from the count information 22, a set (type) of time-consuming quantum gates (Step S13). The information processing apparatus 1 posteriorly rearranges a qubit having the largest number of quantum gates, on the basis of the numbers of quantum gates for the qubits, the numbers of quantum gates corresponding to the selected set (type) (Step S14). The information processing apparatus 1 performs the rearrangement by putting qubits having the same number in the same group. Furthermore, in a case where there is a group in the qubits that have been rearranged already, the information processing apparatus 1 performs rearrangement within the same group.

The information processing apparatus 1 then determines whether or not there is any set (type) of quantum gates that has not been selected yet (Step S15). In a case where the information processing apparatus 1 determines that there is any set (type) of quantum gates that has not been selected yet (Step S15: Yes), the information processing apparatus 1 proceeds to Step S13 to select a set (type) of quantum gates that has not been selected yet.

On the contrary, in a case where the information processing apparatus 1 determines that there is not any set (type) of quantum gates that has not been selected yet (Step S15: No), the information processing apparatus 1 outputs information on the qubits that have been rearranged (Step S16). The information processing apparatus 1 then ends the order generation process.

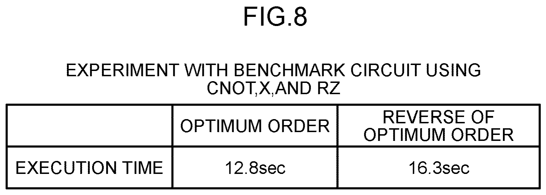

FIG. 8 is a diagram illustrating an example of results of execution by the quantum circuit simulator. FIG. 8 illustrates execution time results in a case where the quantum circuit simulator 30 has simulated quantum states of a quantum circuit using "CNOT", "X" (synonymous with "CX"), and "RZ" as quantum gates. In a case where the quantum circuit simulator 30 receives the optimum order of qubits, the simulation time taken is 12.8 seconds. In a case where the quantum circuit simulator 30 receives the order that is the reverse of the optimum order of qubits, the simulation time taken is 16.3 seconds. Therefore, the quantum circuit simulator 30 is able to speed up the simulation execution time in the case where the optimum order of qubits is received, as compared to the case where the reverse order is received.

Effects of Embodiment

According to the embodiment, on the basis of a relation between types of quantum gates of plural types used in a quantum circuit and simulation times in the quantum circuit simulator 30 using decision diagrams, the information processing apparatus 1 counts the numbers of quantum gates in descending order of simulation time for each qubit of the quantum circuit targeted. The information processing apparatus 1 determines any quantum gate at a predetermined rank or higher from the quantum gates with plural types of simulation time lengths, determines the numbers of quantum gates for the respective quantum gates determined in a case where there are plural types of quantum gates determined to be at the predetermined rank or higher, and rearranges the order of qubits to be provided to the quantum circuit simulator 30 to ascending order of the number of quantum gates determined. The information processing apparatus 1 then outputs the rearranged order of qubits. The information processing apparatus 1 thereby enables increase in speed of a simulation executed by the quantum circuit simulator 30 of the decision diagram type by providing the order of qubits rearranged in ascending order of the number of time-consuming quantum gates to the quantum circuit simulator 30.

Furthermore, according to the embodiment, the information processing apparatus 1 counts, for each qubit of the quantum circuit targeted, the numbers of quantum gates by type. By using the numbers of quantum gates counted by type for each qubit, the information processing apparatus 1 rearranges the qubits in ascending order of the number of quantum gates with simulation time lengths at the predetermined rank or higher. The information processing apparatus 1 is thereby able to determine the order of qubits, the order enabling the simulation time to be shortened.

Furthermore, according to the embodiment, the information processing apparatus 1 selects the types of quantum gates in descending order of simulation time. By posteriorly rearranging a qubit with a larger number of quantum gates of a type selected, the information processing apparatus 1 rearranges the qubits in ascending order of the number of quantum gates that take time in simulation. The information processing apparatus 1 is thereby able to efficiently determine the order of qubits, the order enabling the simulation time to be shortened.

Furthermore, according to the embodiment, the information processing apparatus 1 performs rearrangement by putting qubits with the same number of quantum gates in the same group and performs rearrangement within the group by using the number of quantum gates for the type of quantum gate selected next time and later for the qubits belonging to the group. This configuration enables accurate determination of the order of qubits, the order enabling the simulation time to be shortened.

Furthermore, according to the embodiment, the information processing apparatus 1 inputs the output order of qubits into the quantum circuit simulator 30 and causes the quantum circuit simulator 30 to execute a simulation using a decision diagram. The quantum circuit simulator 30 thereby enables the simulation to be speeded up by executing the simulation using the order of qubits.

The components of the information processing apparatus 1 illustrated in the drawings are not necessarily configured physically as illustrated in the drawings. That is, specific modes of distribution and integration of the information processing apparatus 1 are not limited to those illustrated in the drawings and all or part thereof may be configured to be distributed or integrated functionally or physically in any units according to various loads and use situations. For example, the input unit 12 and the order generation unit 13 may be integrated with each other. Furthermore, the order generation unit 13 may be distributed into a generation unit to generate the count information 22 and a rearrangement unit to rearrange the order of qubits using the count information 22. Furthermore, the storage unit 20 may be connected as an external device of the information processing apparatus 1, via a network.

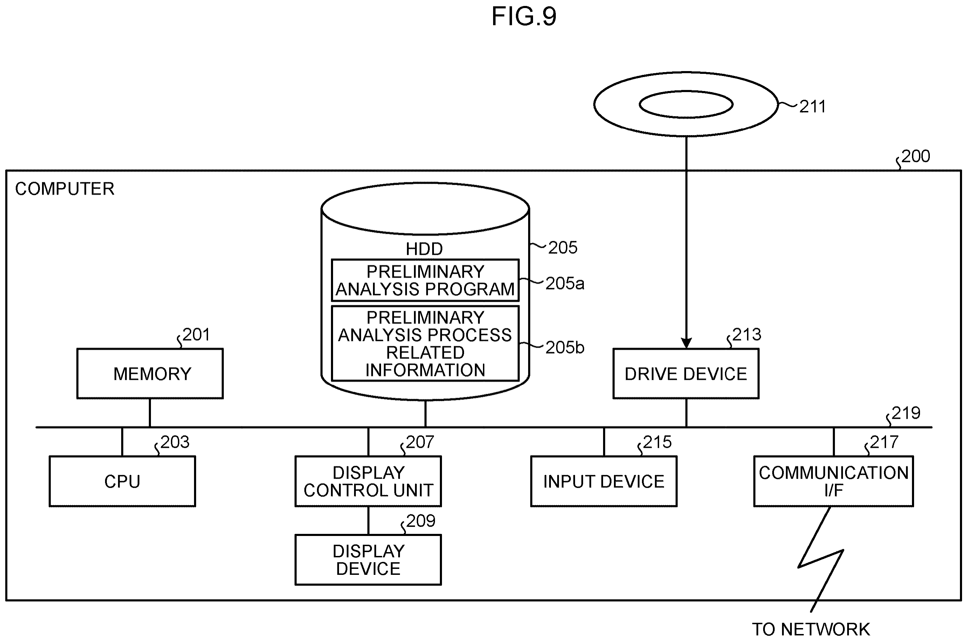

Furthermore, various processes described with respect to the embodiment may be implemented by a computer, such as a personal computer or a workstation, executing a program that has been prepared beforehand. An example of a computer that executes an information processing program that implements the same functions as the information processing apparatus 1 illustrated in FIG. 1 will thus be described hereinafter. The information processing program that implements the same functions as the information processing apparatus 1 will be described herein as an example. FIG. 9 is a diagram illustrating an example of a computer that executes a preliminary analysis program.

As illustrated in FIG. 9, a computer 200 has a central processing unit (CPU) that executes various kinds of computation processing, an input device 215 that receives input of data from a user, and a display device 209. Furthermore, the computer 200 has a drive device 213 that reads, for example, a program, from a storage medium, and a communication interface (I/F) 217 that provides and receives data to and from another computer via a network. Furthermore, the computer 200 has a memory 201 that temporarily stores various kinds of information, and a hard disk drive (HDD) 205. The memory 201, the CPU 203, the HDD 205, a display control unit 207, the display device 209, the drive device 213, the input device 215, and the communication I/F 217 are connected to one another by a bus 219.

The drive device 213 is, for example, a device for a removable disk 211. The HDD 205 stores a preliminary analysis program 205a and a preliminary analysis process related information 205b. The communication I/F 217 serves as an interface between the network and the interior of the apparatus and controls input and output of data from and to another computer. For example, a modem and a LAN adapter may be adopted as the communication I/F 217.

The display device 209 is a display device that displays: in addition to a cursor, an icon, or a toolbox; data, such as a document, an image, or function information. For example, a liquid crystal display or an organic electroluminescence (EL) display may be adopted as the display device 209.

The CPU 203 reads the preliminary analysis program 205a, loads the read preliminary analysis program 205a into the memory 201, and executes the preliminary analysis program 205a as a process. This process corresponds to the respective functional units of the information processing apparatus 1. The preliminary analysis process related information 205b includes, for example, the characteristic information 21 and the count information 22. For example, the removable disk 211 stores information including the preliminary analysis program 205a.

The preliminary analysis program 205a is not necessarily stored in the HDD 205 from the start. For example, the program may be stored in a "portable physical medium", such as a flexible disk (FD), a CD-ROM, a DVD disk, a magneto-optical disk, or an IC card, which is inserted in the computer 200. The computer 200 may then read and execute the preliminary analysis program 205a therefrom.

Furthermore, the process executed by the information processing apparatus 1 described with respect to the embodiment is applicable to a quantum simulation for calculating a quantum state in a quantum circuit by using a DD quantum circuit simulator.

Explanation of Reference

**EP 4 675 514 A1**

1    INFORMATION PROCESSING APPARATUS

10    CONTROL UNIT

11    CHARACTERISTIC EXTRACTION UNIT

12    INPUT UNIT

13    ORDER GENERATION UNIT

14    ORDER DISPLAY UNIT

20    STORAGE UNIT

21    CHARACTERISTIC INFORMATION

22    COUNT INFORMATION

30    QUANTUM CIRCUIT SIMULATOR

**Claims**

1. A preliminary analysis program that causes a computer to execute a process including:

   counting, on the basis of a relation between types of quantum gates of plural types used in a quantum circuit and simulation times in a quantum circuit simulator that uses a decision diagram, the numbers of the quantum gates in descending order of the simulation time for each qubit of the quantum circuit targeted;
   determining the quantum gates with lengths of the simulation times at a predetermined rank or higher from the plural types of quantum gates, and determining the number of the quantum gates for each of the quantum gates determined in a case where there are plural types of the quantum gates determined to be at the predetermined rank or higher, and rearranging an order of the qubits to be provided to the quantum circuit simulator in ascending order of the number determined; and
   outputting the rearranged order of the qubits.

2. The preliminary analysis program according to claim 1, wherein

   the counting includes counting the numbers of quantum gates by type, for each qubit of the quantum circuit targeted, and
   the rearranging includes rearranging the qubits in ascending order of the number of quantum gates with the lengths of the simulation times at the predetermined rank or higher, by using the numbers of the quantum gates by type counted for each of the qubits.

3. The preliminary analysis program according to claim 2, wherein the rearranging includes:

   selecting types of the quantum gates in descending order of the simulation time; and
   rearranging the qubits in ascending order of the number of quantum gates with the simulation times that are long, by posteriorly rearranging a qubit with a larger number of the quantum gates of the type selected.

4. The preliminary analysis program according to claim 3, wherein the rearranging includes putting qubits having the same number of the quantum gates in the same group for the rearranging, and rearranging the qubits belonging to the group within the group by using the numbers of the quantum gates of the type of the quantum gates selected next time and later.

5. The preliminary analysis program according to claim 1, wherein the output order of the qubits is input to the quantum circuit simulator and the quantum circuit simulator is caused to execute a simulation using the decision diagram.

6. An information processing apparatus, comprising:

a counting unit that counts, on the basis of a relation between types of quantum gates of plural types used in a quantum circuit and simulation times in a quantum circuit simulator that uses a decision diagram, the numbers of the quantum gates in descending order of the simulation time for each qubit of the quantum circuit targeted;

a rearrangement unit that determines the quantum gates with lengths of the simulation times at a predetermined rank or higher from the plural types of quantum gates, determines the number of quantum gates for each of the quantum gates determined in a case where there are plural types of the quantum gates determined to be at the predetermined rank or higher, and rearranges an order of the qubits to be provided to the quantum circuit simulator in ascending order of the number determined; and

an output unit that outputs the rearranged order of the qubits.

7. A simulation method that is a method of simulating a quantum state by using an information processing apparatus and a quantum circuit simulator, wherein a computer executes a process including:

the information processing apparatus

counting, on the basis of a relation between plural types of quantum gates used in a quantum circuit and simulation times in a quantum circuit simulator that uses a decision diagram, the numbers of the quantum gates in descending order of the simulation time for each qubit of the quantum circuit targeted, and determining the quantum gates with lengths of the simulation times at a predetermined rank or higher from the plural types of quantum gates, and determining the number of the quantum gates for each of the quantum gates determined in a case where there are plural types of the quantum gates determined to be at the predetermined rank or higher, and rearranging an order of the qubits to be provided to the quantum circuit simulator in ascending order of the number determined, and

the quantum circuit simulator

receiving the rearranged order of the qubits, and executing a simulation of a quantum state of qubits in the quantum circuit by using the rearranged order of the qubits.

# FIG.1

INFORMATION PROCESSING APPARATUS ⟨1

CONTROL UNIT ⟨10

| ⟨12 INPUT UNIT | ⟨13 ORDER GENERATION UNIT | ⟨14 ORDER DISPLAY UNIT |

⟨11 CHARACTER-ISTIC EXTRACTION UNIT

30
QUANTUM CIRCUIT SIMULATOR

STORAGE UNIT ⟨20

⟨21 CHARAC-TERISTIC INFORMA-TION

⟨22 COUNT INFORMA-TION

# FIG.2

21

[RX,RY,RZ], [CX,CY,CZ] ,···

# FIG.3

22

QUBIT

|  | q0 | q1 | q2 |
|---|---|---|---|
| [RX,RY,RZ] | 0 | 1 | 0 |
| [CX,CY,CZ] | 1 | 1 | 2 |

QUANTUM GATE (IN DESCENDING ORDER OF TIME TAKEN)

# FIG.4

QCα

qα1 —[U]———————————⎤
qα2 —[U]———————————⎟
⋮                    ⎬ ABOUT m QUBITS
   —[U]—————————————⎟
qαm —[U][U][U]············[U]⎦

ABOUT n QUANTUM GATES

# FIG.5

QUANTUM CIRCUIT
QC0

CHARACTERISTIC
INFORMATION ON
QUANTUM CIRCUIT
SIMULATOR
21

q0 — H — ●

q1 — RY (0.1) — X

q2 — H — Y — ●

[RX,RY,RZ], [CX,CY,CZ] ,···

COUNT
INFORMATION
22

QUBIT

QUANTUM GATE
(IN DESCENDING
ORDER OF TIME
TAKEN)

|  | q0 | q1 | q2 |
|---|---|---|---|
| [RX,RY,RZ] | 0 | 1 | 0 |
| [CX,CY,CZ] | 1 | 1 | 2 |

{q0, q1,q2} → {q0,q2} ,{q1} → {q0}{q2}{q1}

FIG.6

FINAL QUANTUM STATE
(OPTIMUM ORDER)
EXECUTION TIME IS SHORT

$q_0$

1

$1/\sqrt{2}$   $1/\sqrt{2}e(-i\pi/2)$

$q_2$   $q_2$

$1/\sqrt{2}$   $1/\sqrt{2}$   $1/\sqrt{2}$   $-1/\sqrt{2}$

$q_1$   $q_1$

0.0499792   0.0499792

0.99875   0.99875

1

FINAL QUANTUM STATE
(REVERSE OF OPTIMUM ORDER)
EXECUTION TIME IS LONG

$q_1$

1

$1/\sqrt{2}$   $1/\sqrt{2}$

$q_2$   $q_2$

0.0499792

0.99875   0.99875

0.0499792

$q_0$   $q_0$

$1/\sqrt{2}e(-i\pi/2)$

$1/\sqrt{2}$   $1/\sqrt{2}$   $1/\sqrt{2}e(i\pi/2)$

1

EP 4 675 514 A1

# FIG.7

```
                              START

                                │
                    ┌──────────▼──────────┐
                    │         HAS          │
          NO        │   INFORMATION ON     │      S11
        ┌───────────│ QUANTUM CIRCUIT TARGETED │
        │           │   AND CHARACTERISTIC  │
        │           │   INFORMATION BEEN    │
        │           │        INPUT?         │
        │           └──────────┬──────────┘
        │                      │ YES
        │           ┌──────────▼──────────┐
        │           │ COUNT NUMBERS OF QUANTUM GATE BY │  S12
        │           │    TYPE FOR EACH QUBIT  │
        │           └──────────┬──────────┘
        │                      │
        │   ┌──────────────────▼──────────┐
        │   │ SELECT SET OF TIME-CONSUMING │   S13
        │   │ QUANTUM GATES FROM COUNT     │
        │   │       INFORMATION            │
        │   └──────────┬──────────────────┘
```

HAS INFORMATION ON QUANTUM CIRCUIT TARGETED AND CHARACTERISTIC INFORMATION BEEN INPUT? — S11

NO

YES

COUNT NUMBERS OF QUANTUM GATE BY TYPE FOR EACH QUBIT — S12

SELECT SET OF TIME-CONSUMING QUANTUM GATES FROM COUNT INFORMATION — S13

POSTERIORLY REARRANGE QUBIT HAVING LARGEST NUMBER OF QUANTUM GATES FROM NUMBERS OF QUANTUM GATES FOR RESPECTIVE QUBITS CORRESPONDING TO SELECTED SET (PUT QUBITS WITH SAME NUMBER IN SAME GROUP) — S14

IS THERE ANY SET OF QUANTUM GATES NOT SELECTED YET? — S15

YES

NO

OUTPUT INFORMATION ON QUBITS THAT HAVE BEEN REARRANGED — S16

END

# FIG.8

EXPERIMENT WITH BENCHMARK CIRCUIT USING
CNOT,X,AND RZ

|  | OPTIMUM ORDER | REVERSE OF OPTIMUM ORDER |
|---|---|---|
| EXECUTION TIME | 12.8sec | 16.3sec |

# FIG.9

COMPUTER — 200

HDD — 205
PRELIMINARY ANALYSIS PROGRAM — 205a
PRELIMINARY ANALYSIS PROCESS RELATED INFORMATION — 205b

211

213 DRIVE DEVICE

MEMORY — 201

CPU — 203

DISPLAY CONTROL UNIT — 207

DISPLAY DEVICE — 209

INPUT DEVICE — 215

COMMUNICATION I/F — 217

219

TO NETWORK

EP 4 675 514 A1

FIG.10

FIG.11

# FIG.12

$$
\begin{array}{ll}
000 \rightarrow & 0.5 \\
001 \rightarrow & 0.5e^{-\frac{\pi}{2}i} \\
010 \rightarrow & 0 \\
011 \rightarrow & 0 \\
100 \rightarrow & 0.5 \\
101 \rightarrow & 0.5e^{\frac{\pi}{2}i} \\
110 \rightarrow & 0 \\
111 \rightarrow & 0
\end{array}
$$

FIG.13

FIG.14

GRAPH CHANGES IN
SHAPE ACCORDING TO
ORDER EVEN FOR SAME
QUANTUM CIRCUIT

**EP 4 675 514 A1**

## INTERNATIONAL SEARCH REPORT

International application No.

**PCT/JP2023/007897**

| A. | CLASSIFICATION OF SUBJECT MATTER |
|---|---|

*G06N 10/80*(2022.01)i
FI:  G06N10/80

According to International Patent Classification (IPC) or to both national classification and IPC

| B. | FIELDS SEARCHED |
|---|---|

Minimum documentation searched (classification system followed by classification symbols)

G06N10/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | US 2015/0339417 A1 (THE REGENTS OF THE UNIVERSITY OF MICHIGAN) 26 November 2015 (2015-11-26)<br>      paragraphs [0005], [0031] | 1-7 |
| A | US 2022/0067245 A1 (MICROSOFT TECHNOLOGY LICENSING, LLC) 03 March 2022 (2022-03-03)<br>      paragraph [0039] | 1-7 |
| A | CN 113723613 A (BEIJING BAIDU NETCOM SCI & TECH CO., LTD.) 30 November 2021 (2021-11-30)<br>      paragraphs [0041]-[0047] | 1-7 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/007897**

| Patent document cited in search report | | | Publication date (day/month/year) | Patent family member(s) | | | Publication date (day/month/year) |
|---|---|---|---|---|---|---|---|
| US | 2015/0339417 | A1 | 26 November 2015 | WO | 2015/179753 | A1 | |
| | | | | paragraphs [0005], [0030] | | | |
| US | 2022/0067245 | A1 | 03 March 2022 | WO | 2022/046245 | A2 | |
| | | | | paragraph [0038] | | | |
| CN | 113723613 | A | 30 November 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001109785 A
- JP H10040270 A
- US 20050229124